# DEMANDE DE BREVET EUROPEEN

(11) **EP 1 369 334 A2**
(43) Date de publication de la demande: **10.12.2003**
(21) Numéro de dépôt: 03447142.5
(22) Date de dépôt: 05.06.2003
(51) Int. Cl.: B62B 9/14, B62B 5/00

(54) **Capote de protection pour poussette**

(30) Priorité: 07.06.2002 BE 200200376
(71) Demandeur: Sevy-Lempel, Lesley, Anvers (BE); Sevy-Lempel, Marc, Anvers (BE)
(72) Inventeur: Sevy-Lempel, Lesley, Anvers (BE); Sevy-Lempel, Marc, Anvers (BE)
(74) Mandataire: Van Straaten, Joop

(57) **Abrégé**

Un dispositif de protection (4) contre les intempéries pour une personne manipulant un véhicule repliable pour enfant (2), ce dispositif(4) comprenant un élément de toiture (6) et deux montants télescopiques (8); dans ce dispositif (4), chacun des montants télescopiques (8) comprend un premier élément télescopique (10) fixé au véhicule (2) en un point haut et en un point bas, ce qui assure une très grande résistance aux intempéries.

## Description

L'invention concerne un dispositif destiné à protéger des intempéries les personnes véhiculant un enfant dans une poussette-canne ou un landau.

La plupart des poussettes et des landaus peuvent être équipés d'une toiture amovible, généralement une capote protégeant l'enfant qui y est véhiculé.

Toutefois, les personnes manipulant le véhicule ne sont pas protégées elles-mêmes. En cas d'intempéries, elles doivent donc avoir recours à un parapluie, ce qui s'avère éminemment peu pratique, la poussette devant alors être manipulée d'une seule main.

Différentes tentatives ont été faites pour remédier à ce problème, mais aucune, à ce jour, ne s'est révélé satisfaisante.

Le brevet US 3,304,005 décrit, pour un caddie de golf, un élément asymétrique en forme de parapluie. Le manche de ce parapluie est fixé à la poignée du caddie.

GB 2 344 788 montre un dispositif similaire formé d'une capote à arceaux.

Dans GB 2 366 254, qui est considéré comme l'état de la technique le plus proche, une capote à arceaux comprenant deux montants télescopiques est fixée à une poussette d'enfant.

Ce dernier dispositif présente cependant une médiocre stabilité au vent et se tord facilement.

US 5 967 601 présente une chaise de plage munie d'un panneau protégeant l'utilisateur de l'ardeur des rayons solaires. On remarquera que ce type de chaise n'est pas repliable en largeur comme une poussette-canne et que, par ailleurs, l'armature de support du panneau est fixée à un seul élément de la chaise, à savoir le dossier. Un tel pare-soleil n'est donc pas directement transposable à une poussette-canne ou à un landau.

On a cherché à développer un dispositif stable, peu encombrant et facile à utiliser.

L'objet de l'invention est un dispositif de protection contre les intempéries pour une personne manipulant un véhicule repliable pour enfant, ce dispositif comprenant un élément de toiture et deux montants télescopiques ; dans ce dispositif, chacun des montants télescopiques comprend un premier élément télescopique fixé au véhicule en un point haut et en un point bas.

De façon avantageuse, le point haut est situé sur la ou les poignées du véhicule et le point bas sensiblement à hauteur des roues du véhicule.

La partie inférieure du premier élément a, de préférence, la forme d'un L orienté dans un plan longitudinal par rapport au véhicule.

Suivant une forme de réalisation avantageuse, l'élément de toiture comprend une bâche et un cadre plat apte à se replier contre les montants télescopiques.

Le cadre plat comprend, de façon préférée, un système de tringlerie dépliant latéralement antennes lorsque l'élément de toiture est déplié.

Suivant un mode de réalisation avantageux, la bâche comprend un panneau frontal transparent, voire des panneaux latéraux transparents.

La bâche est constituée de préférence à partir d'un matériau synthétique tel que le nylon.

La bâche est fixée au cadre de préférence par des bandelettes à accrochement mutuel.

Suivant un mode de réalisation avantageux, la position relative des éléments des montants télescopiques est ajustable en hauteur par un dispositif de blocage manuel.

Un autre objet de l'invention est un véhicule pour enfant muni d'un dispositif de protection contre les intempéries tel que décrit ci-dessus.

D'autres particularités et avantages de l'invention ressortiront de la description ci-après de modes de réalisation particuliers de l'invention, référence étant faite aux dessins annexés dans lesquels :
La Fig. 1 est une vue latérale d'une poussette munie du dispositif de l'invention, déplié.
La Fig. 2 est une vue en perspective d'une poussette munie du dispositif de l'invention, partiellement replié.
La Fig. 3 est une vue en plan du cadre de l'élément de toiture.
La Fig. 4 est une vue en perspective de l'allure générale d'une poussette munie du dispositif de l'invention avec des panneaux latéraux et frontaux.

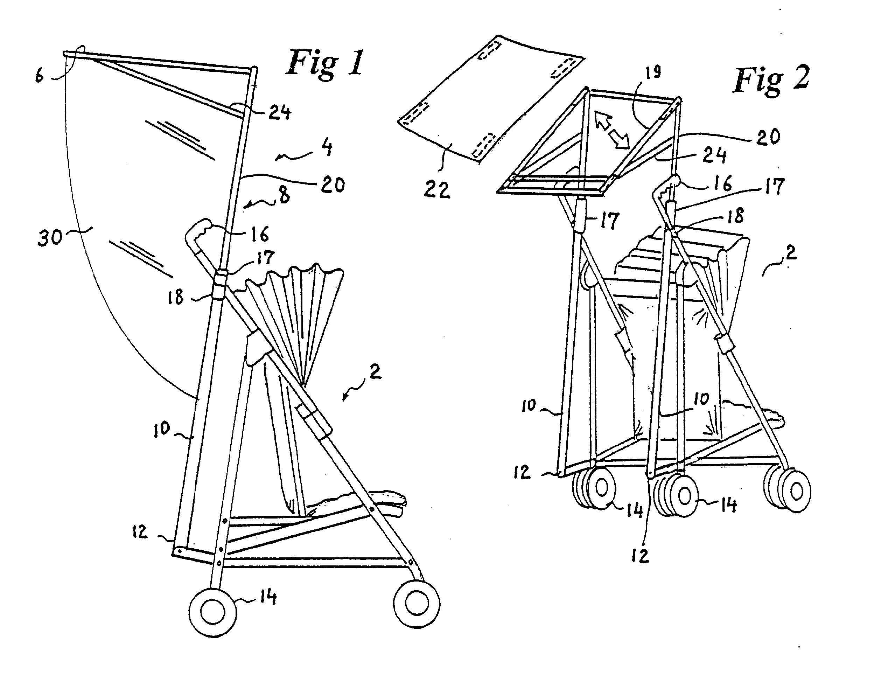

On a représenté à la Fig. 1 un véhicule pour enfant, en l'occurrence une poussette canne 2, munie du dispositif de protection de l'invention 4. Ce dispositif comprend un élément de toiture 6 et deux montants télescopiques 8. Chacun de ces montants 8 comprend un premier élément 10 fixé en deux points du châssis de la poussette 2. L'extrémité inférieure 12 de ce premier élément 10, qui a ici la forme d'un L, est fixée sur le châssis à hauteur de la roue arrière 14 de la poussette. La partie supérieure du premier élément 10 est fixée par contre sensiblement à hauteur de la poignée 16 de la poussette 2. Cette conception particulière donne à l'ensemble de la structure une excellente rigidité et permet d'ajuster la hauteur de l'élément de toiture jusqu'à deux mètres de haut sans en altérer la stabilité. La longueur des montants 8 est ajustée en agissant sur la position respective des éléments télescopiques et en les immobilisant dans cette position par un moyen de blocage connu 17 à vis ou à patin.

L'extrémité inférieure en L, représentée ici articulée, permet de replier la poussette-canne sans avoir à démonter le support du montant télescopique 10.

Suivant le modèle de poussette, la base du L peut également être rigide. Le premier élément 10 des montants télescopiques 8 est fixé au châssis de la poussette 2 par des moyens connus tels que des bracelets métalliques 18.

La Fig. 2 montre l'aspect que revêt le dispositif partiellement replié. Lorsqu'il n'est pas utilisé, le cadre 19 de l'élément de toit 16 peut en effet se rabattre parallèlement aux montants, et la partie supérieure 20 du montant télescopique peut être renfoncée dans le premier élément 10 de façon à ce que l'ensemble occupe une place aussi restreinte que possible. En outre, comme montré à la Fig. 2, il est possible de détacher la toile 22 tendue sur le cadre 18 de l'élément de toiture 6, la solidarisation s'effectuant par le biais de bandelettes à accrochage mutuel (type Velcro®)23. Il va de soi que l'on peut envisager un autre mode de solidarisation.

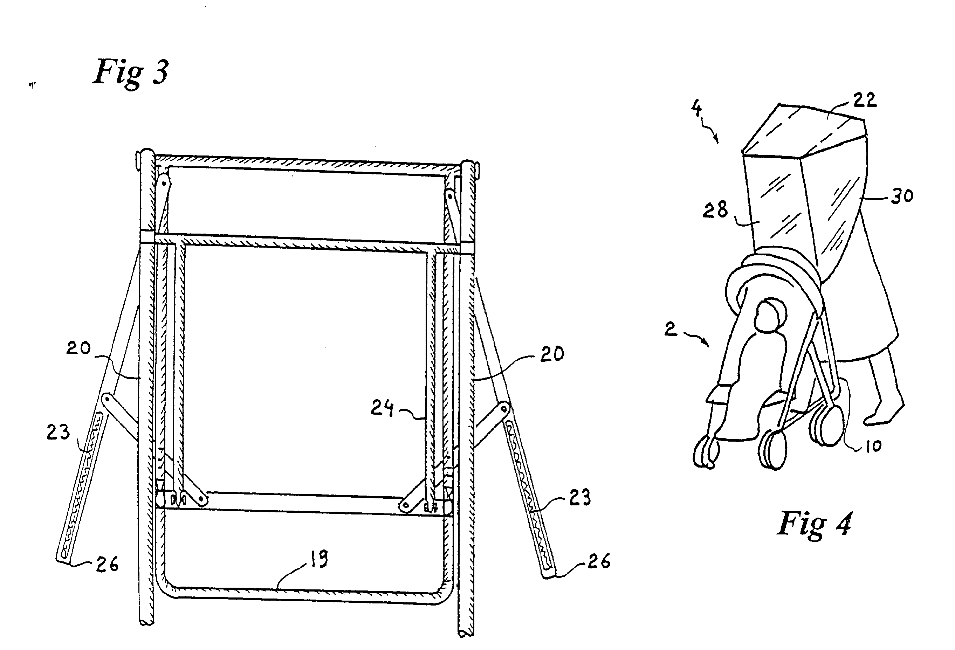

La Fig. 3 montre, en plan, la structure du cadre 19 de l'élément de toiture. Suivant le mode de réalisation représenté ici, la tringlerie 24 reliant le cadre 19 aux montants 8 actionne, en se déployant latéral, deux antennes 26 qui augmentent, par leur déploiement, la surface protégée par le dispositif.

La Fig. 4 montre, comme la Fig. 3, que le dispositif 4 peut être complété par l'adjonction de panneaux frontaux 28 et latéraux 30, réalisés en un matériau transparent, de façon à protéger complètement l'usager sans entraver la mobilité de la poussette.

Il va de soi que le présent dispositif peut être adapté aussi bien à des poussette-canne, comme représenté, qu'à des poussettes classiques ou à des landaus.

## Revendications

1. Un dispositif de protection (4) contre les intempéries pour une personne manipulant un véhicule repliable pour enfant (2), ce dispositif (4) comprenant un élément de toiture (6) et deux montants télescopiques(8), **caractérisé en ce que** chacun des montants télescopiques (8) comprend un premier élément télescopique (10) fixé au véhicule (2) en un point haut et en un point bas.

2. Un dispositif de protection suivant la revendication 1 **caractérisé en ce que** le point haut est situé à proximité de la ou des poignées (16) du véhicule (2) et le point bas sensiblement à hauteur des roues (14) du véhicule (2).

3. Un dispositif de protection suivant l'une quelconque des revendications précédentes **caractérisé en ce que** la partie inférieure (12) du premier élément (10) a la forme d'un L orienté dans un plan longitudinal par rapport au véhicule(2).

4. Un dispositif de protection suivant l'une quelconque des revendications précédentes **caractérisé en ce que** l'élément de toiture (6) comprend une bâche (22) et un cadre plat (19) apte à se replier contre les montants télescopiques (8).

5. Un dispositif de protection suivant la revendication 4 **caractérisé en ce que** le cadre plat (19) comprend un système de tringlerie (24) dépliant latéralement des antennes (26) lorsque l'élément de toiture (6) est déplié.

6. Un dispositif de protection suivant l'une quelconque des revendications précédente **caractérisé en ce que** la bâche (22) comprend un panneau frontal (28) transparent.

7. Un dispositif de protection suivant l'une quelconque des revendications précédentes **caractérisé en ce que** la bâche (22) comprend des panneaux latéraux (30) transparents.

8. Un dispositif de protection suivant l'une quelconque des revendications précédentes **caractérisé en ce que** la bâche (22) est constituée à partir d'un matériau synthétique.

9. Un dispositif de protection suivant l'une quelconque des revendications précédentes **caractérisé en ce que** la bâche (22) est fixée au cadre par des bandelettes à accrochement mutuel(23).

10. Un dispositif de protection suivant l'une quelconque des revendications précédentes **caractérisé en ce que** la position relative des éléments (10, 20) des montants télescopiques (8) est ajustable en hauteur par un dispositif de blocage manuel (17).
